# EUROPEAN PATENT APPLICATION

(11) **EP 1 528 499 A1**
(43) Date of publication of application: **04.05.2005**
(21) Application number: 04394066.7
(22) Date of filing: 03.11.2004
(51) Int. Cl.: G06F 17/60

(54) **Transaction processing**

(30) Priority: 03.11.2003 IE 20030818
(71) Applicant: Web Component Trading Limited, Tralee, County Kerry (IE)
(72) Inventor: Scroope, Alan, Killarney County Kerry (IE)
(74) Representative: Weldon, Michael James

(57) **Abstract**

Transaction processing is performed by an integration hub (100) communicating with :a number of broker systems B1, B2 ... Bn; and a number of manufacturer client systems (200). The hub (100) has a client-side interface with an access control mechanism for interfacing with client systems (200), and a broker-side interface with a different access control mechanism for interfacing with the broker systems. When an upload is received from a client for an offer for sale or purchase of goods a broadcast is performed in which a notification with a unique reply URL is sent to each of a selected group of external systems. Each response identifies a log-on page (400), however the full URL is different for each due to the extension query string (such as, "link=10" and "link=57"). A detector function (420) monitors the incoming strings and, using a database (421) determines automatically the identity of the party responding. Thus, the recipient of the notification message can simply click on the link in the message and is then immediately directed to the log-on page (400) and the hub (100) automatically detects their identity without need for them to input any identification data. The log-on page (400) routes the party to the page (410).

## Description

### Field of the Invention

The invention relates to transaction processing for businesses such as for purchase and sale of high-volume manufactured items.

### Prior Art Discussion

At present, manufacturers of a wide variety of products have a need to sell off excess product or raw materials. This may arise, for example, if there is over-production of a consumer electronics product and it has become obsolete for the major markets. At present, such transactions are typically performed outside of the routine day-to-day transaction processing systems with a high time input and often with the seller not getting good value for the products supplied.

While the trend towards automating transaction processing is to use supply chain systems with Web portals, there has been a reluctance to do so because the non-standard nature of the transactions, the degree of confidentiality, and the limited and selective target market do not lend themselves to automation.

The invention is directed towards providing a transaction processing system to allow for more automated handling of such transactions.

### SUMMARY OF THE INVENTION

According to the invention, there is provided an integration hub for transaction processing, the hub comprising:
a client interface for receiving and automatically validating uploads from client systems of data for offering purchase or sale of goods;
a web server for hosting a plurality of web sites, each associated with a client system, and for updating each web site with data which originates from an associated client system upload;
an access controller in the client interface for limiting access by each client system to only the associated web site;
a broadcast controller for transmitting a notification message to a plurality of external systems in response to receiving an upload from a client system; and
a transaction processor for processing purchase or sale of products in response to access by external systems to the web sites hosted by the hub.

In one embodiment, the hub automatically validates an upload by sequentially performing a plurality of validation tests.

In one embodiment, a validation test determines if the structure of an upload file matches criteria for the transmitting client system.

In one embodiment, a validation test determines if format of data in the upload matches criteria for the transmitting client system.

In one embodiment, a validation test determines if content of data in an upload satisfies criteria for the transmitting client system.

In one embodiment, the hub dynamically retrieves a set of rules associated with a transmitting client system for validating content of said data.

In another embodiment, the hub initiates a work flow process upon validation of an upload.

In one embodiment, a work flow process stage comprises a validation step including interactively transmitting uploaded data to successive client system users identified in an approval work flow definition.

In one embodiment, failure to receive approval from any user identified in the work flow definition causes an error message to be transmitted and the work flow to be terminated.

In a further embodiment, the broadcast controller implements a work flow stage of transmitting notifications to members of either a list of external systems identified in the upload or to members of a list which it automatically generates.

In one embodiment, external systems are characterized in a tiered structure according to classifications.

In one embodiment, said classifications are associated with the uploading client system.

In one embodiment, the broadcast controller stores an external system database indexed on said classifications, and dynamically interrogates said database to generate the list.

In one embodiment, the broadcast controller generates a unique notification for each external system, each notification having a unique response code.

In one embodiment, the response code is a query string of a URL directing a response to a log-on page, and the hub comprises a monitoring function for determining identities of responding external systems according to the query strings.

In one embodiment, the URLs direct the responding external systems to a common log-on page.

### DETAILED DESCRIPTION OF THE INVENTION

### Brief Description of the Drawings

The invention will be more clearly understood from the following description of some embodiments thereof, given by way of example only with reference to the accompanying drawings in which:-
Fig. 1 is a diagram illustrating a transaction processing integration hub, and transaction processing message transfers;
Figs. 2(a) to 2(c) are together a flow diagram for technical operation of the hub; and
Fig. 3 shows routing of incoming responses to automated notifications with automatic identification

### Description of the Embodiments

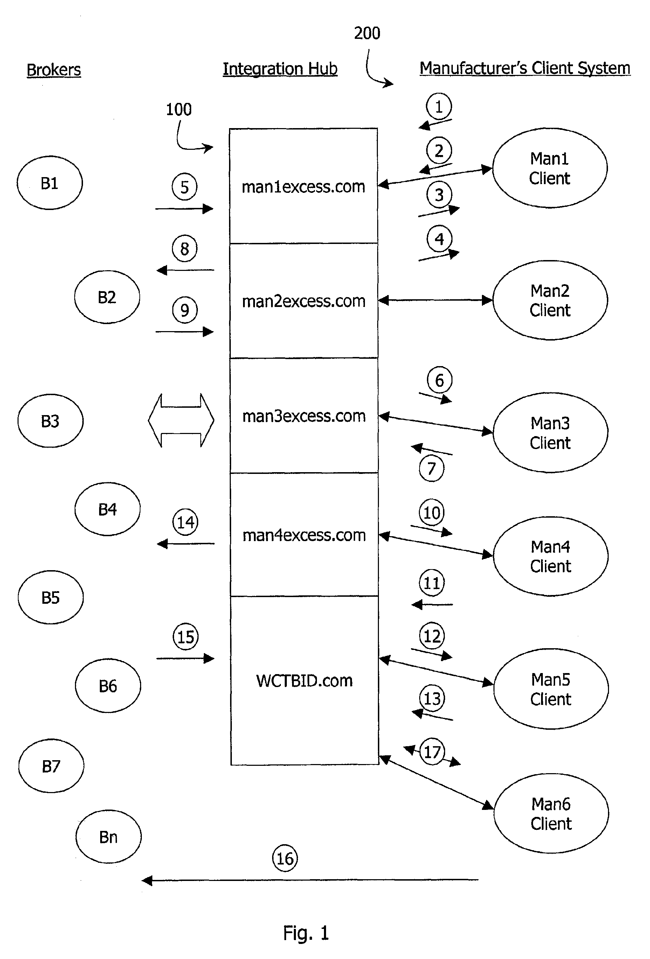

Referring to Fig. 1 transaction processing is performed by an integration hub 100 of the invention communicating with a number of broker systems B1, B2 ... Bn; and a number of manufacturer client systems 200. The hub 100 has a client-side interface with an access control mechanism for interfacing with client systems 200, and a broker-side interface with a different access control mechanism for interfacing with the broker systems.

The integration hub 100 hosts a number of transaction processing Web servers including ones emulating manufacturer systems, man1excess.com, man2excess.com, man3excess.com, and man4excess.com. It also includes a generic trading Web server, WCTBID.com. Access control to the hub 100 ensures that no one party has access to transaction processing data of another party, with the exception of data for the particular instruction. The hub 100 operates one Web server at a core level, however, it dynamically transposes different style sheets according to the current external systems with which it is communicating.

In one mode of operation, the hub 100 allows manufacturers 1, 2, 3 ... m to sell excess product to brokers B1, B2, ... Bn. Product details are posted to the hub 100, which advertise the sale on the Web server associated with the manufacturer or on its generic WCTBID.com Web server. The hub 100 allows access by the broker systems B1 - Bn on the basis or a tiered access control permission structure and allows them to bid. In any one access, any one broker system can access the current highest bid, but not who that bid was made by. At the end of the bidding process, the hub 100 transmits a message to the winning broker system 100 and issues an invoice. The broker system transfers funds for payment and the hub 100 transmits it on to the relevant manufacturer client 200 less a commission. The goods are shipped directly to the location specified by the broker.

The hub 100 may alternatively operate on behalf of a manufacturer to purchase products from brokers. The purchase request is posted on the relevant Web server, and any one broker system can view the current lowest price offering. The purchase order is awarded to the broker making the lowest offer, and the hub 100 transmits the payment and the goods are shipped directly to the manufacturer. Decisions are made by users with access rights sufficient to make decisions, or they are automatically generated. Thus, the hub 100 allows for awarding successful bid on criteria other than just price, i.e. the "bidding process" is brought to an end when a decision is made to award.

The hub 100 includes a database of brokers, in which they are characterized according to geography, trading volume, speciality, and purchasing power or scale. Brokers are allocated to a tier according to this characterization. Allocation of a broker to a tier is achieved by reviewing an extensive application form submitted by a requesting broker. Once allocated to a tier, a broker will only access transaction data for that tier. Each client is also allocated to a tier. Thus all brokers for a particular tier access only inventory data or requests advertised by a client for that tier. This characterization also governs how the hub 100 automatically generates notification messages.

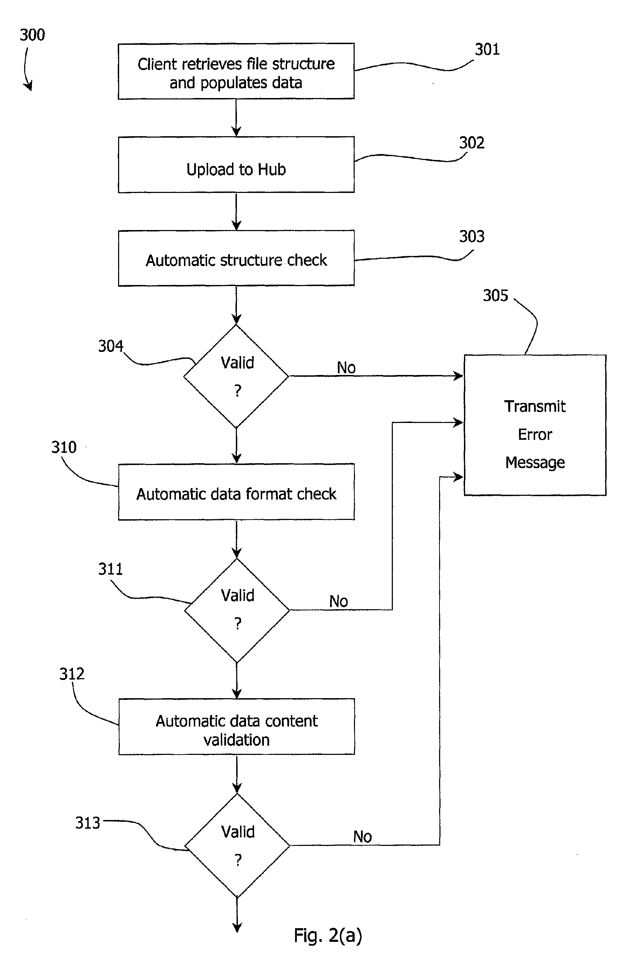

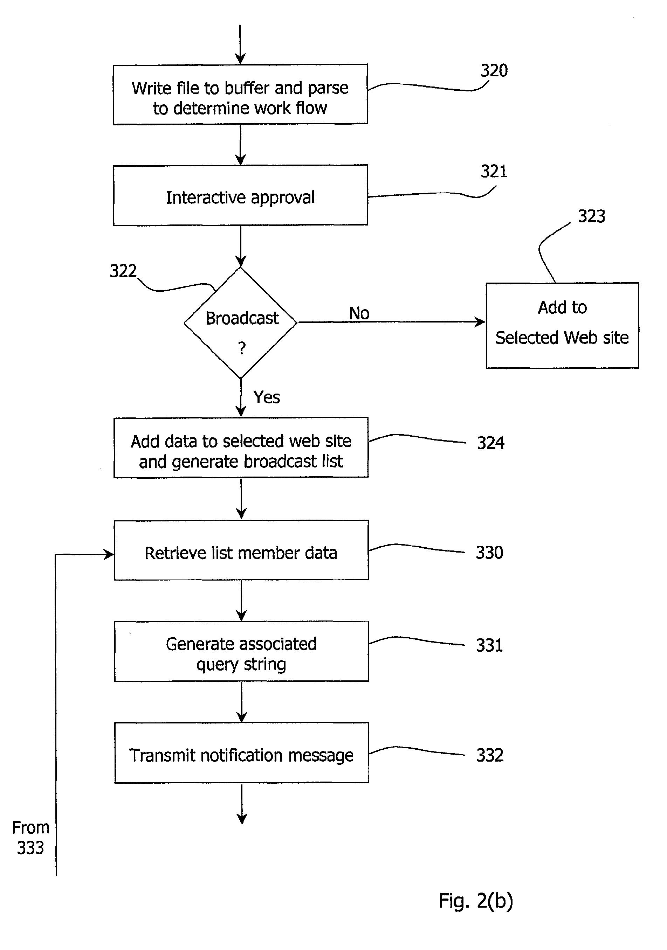

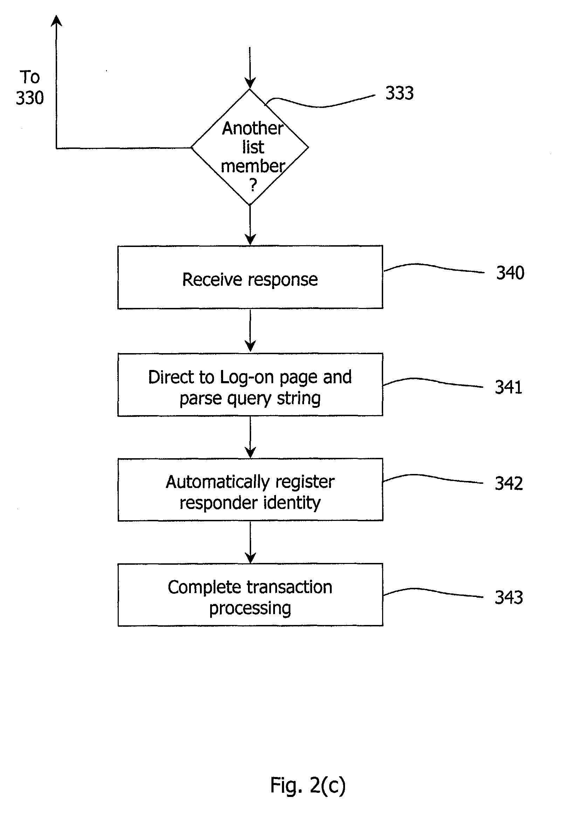

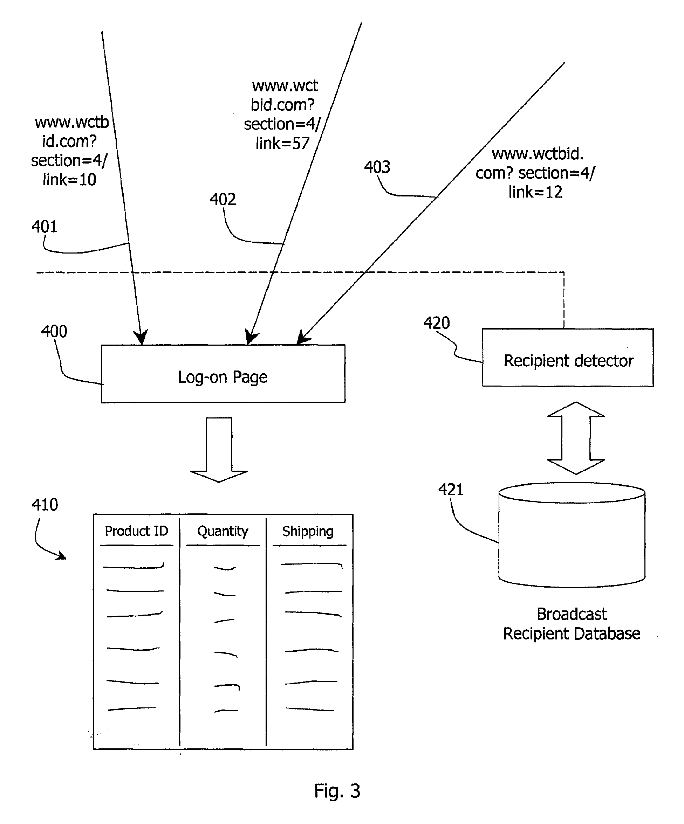

Referring to Figs. 2 and 3 operation of the hub 100 is now described at a more detailed technical level. Each client system (henceforth, "client") 200 is programmed to (step 301) populate a file with data. The file has a set structure which was previously downloaded by the hub 100. The populated file is then uploaded (step 302) to the hub. The data in the file may, for example, be particulars of a quantity of excess inventory to be sold to the highest bidder among a group of the brokers B.

At the hub 100 the received file is subjected to successive automated validation checks. The first (303) is an automatic structure check to validate (304) the row/column structure to ensure that it is the same as that approved by the hub 100. If the structure is incorrect (304) an error message is transmitted (step 305) to the client.

There is then an automatic data format check (310) in which the data is validated at the level of ensuring that data in each section of the file structure is of the correct format, such as numeric or text. Again, an error message (305) is transmitted to the client 200 if incorrect (311).

A more detailed data validation check (312) is then performed, in which the data is parsed, and calculations are performed to ensure consistency in numeric values and valid stock codes. Again, an error message is transmitted (305) if an error is detected (313). To perform step 312 there is a set of validation routines associated with the format as approved in step 303. These routines are automatically retrieved once the format is recognized by the hub 100.

After validation, the file is written (320) to a work flow buffer to commence a work flow process. In a first stage of this process the hub 100 prompts the client (321) to log on and review and approve the data. The client 200 must use particular access control criteria to log on and view this data. In more detail, this work flow stage involves steps of client users sequentially approving the uploaded data. For example, clientuser1, clientuser2, and clientuser3 must review and approve the file contents in this order before it is available on the site, or available for broadcast. Thus, when the file passes all automatic validation the clientuser1 receives a message to logon review and approve. When they do so they can reject it (whereby it falls into the transmit error loop) or approve. The transmit error loop simply advises the reason why the file cannot be loaded to all parties involved thus far in the transaction. If clientuser1 approves, the hub 100 sends a message to clientuser2, and the process is repeated.

The work flow process then commences a notification stage, the nature of which is indicated in the file itself. The received upload file indicates in its data in a pre-set location of the structure if the offer for sale (or purchase) is to be broadcast. If not to be broadcast (322), the data is added to the dedicated or general web site (323).

In step 324, if the data is to be broadcast, it is added to the selected web site and a broadcast list is generated (324), or a short list of brokers identified in the upload is used. For automatic generation of the list of brokers, step 324 involves the hub 100 determining both from the client identity and from the uploaded data a set of characterization or classification criteria. It then dynamically interrogates the broker database to determine according to the characterization criteria the optimum list of brokers.

As indicated by the steps 324 to 333, for each member of the broadcast list the hub 100 retrieves their address data (330). It then (331) generates a unique URL query string for the message to be transmitted to that recipient. The query string may, for example, take the form of www.wctbid,com/section5/link57. The last six characters are the extension to make the query string unique. Thus, a unique query string is generated for each recipient, however they all address the same page on the relevant web site hosted by the hub 100. This page is a log-on page for recipients who receive a broadcast message notifying them of the offer for sale and reply by using the .link having their query string.

The notification message incorporating relevant data from the uploaded file and a URL link having the unique query string is then transmitted to the brokers who satisfy the list criteria. As indicated by the decision step 333, this is repeated for each member of the broadcast list. The term "broadcast" is used here, however it is not strictly a broadcast in the conventional sense because each message is unique.

Referring also to Fig. 3 the log-on page set up by the hub 100 for this particular offer for sale is indicated by the numeral 400. In step 340 the hub 100 receives responses from some of the broadcast brokers, three such responses being indicated as 401, 402, and 403 in Fig. 3. Each response identifies (by the string "section=4") the log-on page 400, however the full URL is different for each due to the extension query string (such as, "link=10" and "link=57"). A detector function 420 in the hub 100 monitors the incoming strings and, using a database 421 established in step 331, determines automatically the identity of the party responding. Thus, the recipient of the notification message can simply click on the link in the message and is then immediately directed to the log-on page 400 and the hub 100 automatically detects their identity without need for them to input any identification data. The log-on page 400 routes the party to the page 410 in which particulars of the offer for sale are set out.
Of course, the secure underlying technical communication mechanism is above is also employed if the uploaded file data is a request to purchase.

As shown by step 343 the hub 100 then proceeds to process a transaction. The automatically logged-on user views the shortage and may or may not bid. Whether they do or not, the hub 100 records the fact they have viewed for reporting purposes.

The hub 100 stores all bid data, whether on shortages or inventory, but the user logged on to the site is advised what the current high bid is and no bid will be accepted unless it is higher than this. The hub 100 achieves this by its processor maintaining a broker-side register which is over-written by a next improved bid. At the same time, the client side access control mechanism of the hub 100 allows full viewing of the bidding activity.

Regarding transaction requirements, the requirements for brokers bidding on client platforms (Web sites) are different from those for the general platform. For example, some allow only bidding on the full quantity available, while others allow bidding only for a sub-set of the quantity available.

All information is restricted from the brokers, apart from the information of the shortage/inventory and the current highest bid amount. Only the client user with authority to view/accept/refuse bids can see the bidding activity on the site. This is achieved by implementing user permissions on the client-side access control mechanism.

The following sets out a sequence of sample message transfers, with reference to the messages numbered 1-17 in Fig. 1.
1. Excess inventory transaction data is sent electronically to the hub 100 to advertise on the WCTBID.com platform or on the client's own branded website which is hosted on the hub 100 (e.g. man2excess.com).
2. Requests to buy components are sent to the hub 100 for them to advertise to approved brokers only. These requests are transmitted in electronic datasheets. Once received, the hub 100 sends requests to approved broker systems only, using Web server technology.
3. Bids that are submitted on-line through the general WCTBID or client branded website are fully visible to the client at all times. The broker-side access control mechanism prevents brokers from knowing the person within the client company who is answering the bids. Nor can the broker see any activity other than their own bidding data.
4. Bids to supply components to clients are submitted by brokers over the WCTBID.com site only. Brokers do not know which client WCT is sourcing the component for.
5. Brokers log all bids to buy client's excess inventory or to supply the parts requested from clients through the WCTBID.com platform. This ensures complete transparency in the process. Brokers are shown the bidding information (they are shown the information relating to items they are bidding on, the current high bid amount but not who is involved) when competing and will be shown the current highest bid when trying to buy excess inventory or will be shown the current lowest bid if trying to supply a requested shortage.
6. Clients view bids through their own branded website or through the general WCTBID.com site. They will only see information pertaining to them and will not see bids relating to another WCT client 200.
7. Clients answer bids from brokers.
8. Brokers receive automated messages from the hub 100 when the client 200 has answered the bids. Clients receive messages when brokers bid on their inventory/shortages and brokers receive confirmation of their bid items.
9. Brokers apply to be given visibility to inventory that is available to sell. They also apply to see the requests for components that clients 200 wish to buy. Clients must approve each broker who applies for access to the hub 100. Brokers apply for visibility to client's excess inventory or component requests.
10. Clients 200 view applications from brokers who want visibility to their stock.
11. Clients approve/refuse applications from brokers who want to buy their excess or supply their shortages.
12. When selling excess inventory, bids that are accepted by clients are processed by the hub 100 sending a PO (Purchase Order) in their name, stipulating the part number, condition, quantity, and accepted bid price. The ship-to address on the PO is that of the broker. The bill to on this PO is issued by the hub 100. This is a major benefit to the client as they now can engage with a number of brokers, yet they never need to interface with them or set them up on their system. WCT are the sole debtor in the process.
13. Clients dispatch goods to the broker and bill the hub 100 directly or in the case of a component purchase they send a PO to the hub 100 to procure the part on their behalf.
14. Brokers receive a tracking number for their shipment of excess inventory or will receive a PO issued by WCT, if WCT are buying a component on behalf of one of their clients.
15. Brokers send money to WCT when procuring excess inventory or send components if supplying a part in response to a WCT request issued on behalf of a WCT client.
16. Client send product direct to broker.
17. WCT will remit funds less their commission when brokers have paid for Excess product they have received from a WCT client. WCT will send the goods and the corresponding invoice if they have supplied a component as requested by the client.

The invention thus provides a comprehensive technical platform to ensure that manufacturers can easily conduct transactions while at the business level obtaining optimum prices for their inventory or buying inventory at the best price. It effectively provides the convenience of Internet consumer transactions even though there is a limited and selective target market and confidentiality of certain data is very important

The invention is not limited to the embodiments described but may be varied in construction and detail.

## Claims

1. An integration hub for transaction processing, the hub comprising:
a client interface for receiving and automatically validating uploads from client systems of data for offering purchase or sale of goods;
a web server for hosting a plurality of web sites, each associated with a client system, and for updating each web site with data which originates from an associated client system upload;
an access controller in the client interface for limiting access by each client system to only the associated web site;
a broadcast controller for transmitting a notification message to a plurality of external systems in response to receiving an upload from a client system; and
a transaction processor for processing purchase or sale of products in response to access by external systems to the web sites hosted by the hub.

2. An integration hub as claimed in claim 1, wherein the hub automatically validates an upload by sequentially performing a plurality of validation tests.

3. An integration hub as claimed in claim 2, wherein a validation test determines if the structure of an upload file matches criteria for the transmitting client system.

4. An integration hub as claimed in claims 2 or 3, wherein a validation test determines if format of data in the upload matches criteria for the transmitting client system.

5. An integration hub as claimed in any of claims 2 or 4, wherein a validation test determines if content of data in an upload satisfies criteria for the transmitting client system.

6. An integration hub as claimed in claim 5, wherein the hub dynamically retrieves a set of rules associated with a transmitting client system for validating content of said data.

7. An integration hub as claimed in any preceding claim, wherein the hub initiates a work flow process upon validation of an upload.

8. An integration hub as claimed in claim 7, wherein a work flow process stage comprises a validation step including interactively transmitting uploaded data to successive client system users identified in an approval work flow definition.

9. An integration hub as claimed in claim 8, wherein failure to receive approval from any user identified in the work flow definition causes an error message to be transmitted and the work flow to be terminated.

10. An integration hub as claimed in any preceding claim, wherein the broadcast controller implements a work flow stage of transmitting notifications to members of either a list of external systems identified in the upload or to members of a list which it automatically generates.

11. An integration hub as claimed in claim 10, wherein external systems are **characterized in** a tiered structure according to classifications.

12. An integration hub as claimed in claim 11, wherein said classifications are associated with the uploading client system.

13. An integration hub as claimed in claims 11 or 12, wherein the broadcast controller stores an external system database indexed on said classifications, and dynamically interrogates said database to generate the list.

14. An integration hub as claimed in any preceding claim, wherein the broadcast controller generates a unique notification for each external system, each notification having a unique response code.

15. An integration hub as claimed in claim 14, wherein the response code is a query string of a URL directing a response to a log-on page, and the hub comprises a monitoring function for determining identities of responding external systems according to the query strings.

16. An integration hub as claimed in claim 15, wherein the URLs direct the responding external systems to a common log-on page.
